# EUROPÄISCHE PATENTSCHRIFT

(11) **EP 2 829 181 B1**
(45) Veröffentlichungstag und Bekanntmachung des Hinweises auf die Patenterteilung: **28.11.2018**
(21) Anmeldenummer: 13177466.3
(22) Anmeldetag: 22.07.2013
(51) Int. Cl.: A21C 15/02, A21D 13/00

(54) **Verfahren zur Herstellung einer sandwichartig aufgebauten Backware sowie Backware, umfassend zwei im Wesentlichen plattenförmig ausgebildete Gebäckteile sowie eine zwischen den beiden Gebäckteilen angeordnete Füllungsschicht**
Method for producing a sandwich-form bakery product and bakery product, comprising two substantially plate-shaped baked parts and a filling layer between the two parts
Procédé de fabrication d'un produit cuit conçu sous la forme d'un sandwich et produit cuit comprenant deux éléments de pâtisserie conçus pour l'essentiel en forme de plaque ainsi qu'une couche de remplissage disposée entre les deux éléments de pâtisserie

(43) Veröffentlichungstag der Anmeldung: 28.01.2015
(73) Patentinhaber: Griesson - de Beukelaer GmbH & Co. KG, 56751 Polch (DE)
(72) Erfinder: Schubert, Anton, 56170 Bendorf (DE); Otten, Lena, 56068 Koblenz (DE); Sprinz-Vogt, Daniel, 56332 Brodenbach (DE); Fabian, Jürgen, Dr., 56332 Dieblich (DE)
(74) Vertreter: Dr. Stark & Partner Patentanwälte mbB

(56) Entgegenhaltungen:
- EP-A2- 0 906 726
- US-A- 2 060 490
- US-A- 5 731 020

## Beschreibung

Die Erfindung betrifft ein Verfahren zur Herstellung einer sandwichartig aufgebauten Backware, die zwei im Wesentlichen plattenförmig ausgebildete Gebäckteile mit je einer Innenfläche und einer Außenfläche sowie eine zwischen den beiden Gebäckteilen angeordnete Füllungsschicht aufweist.

Unter der Innenfläche wird die Oberfläche des betreffenden Gebäckteils verstanden, die bei der fertigen Backware der Füllungsschicht zugewandt ist, während es sich bei der Außenfläche um die Oberfläche handelt, die für den Konsumenten von außen sichtbar ist und an der er die Backware beispielsweise zum Verzehr ergreift.

In der Praxis sind Verfahren bekannt, bei denen zunächst eine Füllungsschicht auf ein erstes Gebäckteil aufgebracht und anschließend ein zweites Gebäckteil von oben aufgedrückt oder aufgelegt wird. Bei der Füllungsschicht handelt es sich beispielsweise um eine Schokoladencreme. Nachteilig ist, dass entsprechend hergestellte Backwaren einen unregelmäßigen Verlauf des Randes der Füllungsschicht aufweisen. Auch kann der Abstand zwischen dem Rand der Füllungsschicht und dem äußeren Rand der Backware variieren. Aus der EP 0 906 726 A2 ist ein Verfahren und eine Vorrichtung zum Herstellen einer Dauerbackware bekannt. Zwischen zwei Keksen ist eine plattenförmige Füllung aus Schokolade angeordnet. Die Füllung weist Mulden auf für weiteres Füllmaterial zum Fügen des Sandwichs. Die US-PS 2, 060, 490 beschreibt ein sandwich mit einem Rahmen und einer Füllung. Der Rahmen ar Erstarrt Geim Frittieren. Aufgabe der Erfindung ist es, die vorgenannten Nachteile zu vermeiden und ein Verfahren anzugeben, das die Herstellung einer Backware mit einer Füllungsschicht erlaubt, deren äußerer Rand beliebig ausgestaltet werden kann und der insoweit auch das gewünschte äußere Erscheinungsbild aufweist und die sich gleichzeitig durch vielfältige Füllungsmöglichkeiten auszeichnet.

Diese Aufgabe wird mit eimem Verfahren gemäß dem ersten Anspruch gelöst.

Unter "in Kontakt bringen der Füllung mit der Innenseite des ersten Gebäckteils" gemäß der zweiten Variante des erfindungsgemäßen Verfahrens wird nicht nur ein in Kontakt bringen der Füllung mit der Innenseite des ersten Gebäckteils, sondern auch ein in Kontakt bringen der Füllung mit einer eventuellen, auf dem ersten Gebäckteil aufgebrachten Zwischenschicht verstanden.

Bei dem erfindungsgemäßen Verfahren nach der zweiten Variante umfasst die Füllungsschicht zumindest einen Rahmen und den/die von dem/den Rahmen umgebenen plattenförmigen, aus dem zweiten Füllungsmaterial bestehenden Bereich/Bereiche und gegebenenfalls ferner noch eine auf das erste Gebäckteil aufgebrachte Zwischenschicht.

Unter "im Bereich der Außenkante" wird eine Anordnung verstanden, bei der der Rahmen direkt, insbesondere flächenbündig, an die betreffende Außenkante angrenzt. Selbstverständlich ist auch eine Anordnung des Rahmens im Abstand von einigen Millimetern oder Zentimetern zur jeweiligen Außenkante der Gebäckteile möglich. Selbstverständlich kann der Rahmen auch außenseitig gegenüber den Gebäckteilen vorstehend ausgebildet sein.

Vorzugsweise ist die Außenkontur des Rahmens an die Form der Backware angepasst. Sind die Gebäckteile beispielsweise quadratisch ausgebildet, ist der Rahmen vorzugsweise auch quadratisch. Selbstverständlich ist aber auch eine abgewandelte Ausgestaltung, beispielsweise in Form eines runden Rahmens bei rechteckigen Gebäckteilen möglich. Auch kann die Backware mehrere nebeneinander angeordnete Rahmen beinhalten.

Unter einem muldenförmigen Innenraum wird ein von einem Rahmen umschlossener Bereich verstanden. Die Form des muldenförmigen Innenraums und auch die Anzahl und die Ausgestaltung der Kanten, wie zum Beispiel die Form der Kanten, können beliebig sein. So können die Kanten beispielsweise eine scharf ausgebildete Kontur aufweisen. Es sind aber auch andere, beispielsweise unregelmäßig verlaufende, Kanten möglich. Die Kontur des muldenförmigen Innenraums ist beispielsweise durch die Ausgestaltung der Form beliebig wählbar.

Im Vergleich zu herkömmlichen Eintafelverfahren bietet das erfindungsgemäße Verfahren den Vorteil, dass eine gefüllte Backware bei ansprechender Optik mit klar definierten Rändern herstellbar ist, wobei die Anzahl an Füllungen beliebig sein kann. Auch die Art der Füllung und der Füllungsaufbau sind frei wählbar. So sind beispielsweise auch Backwaren herstellbar, deren Füllung aus mehreren Füllungsmaterialien, wie z. B. einer Vielzahl von Massen, besteht, und die nach außen dennoch optisch ansprechende Ränder aufweist.

Die Füllung kann beliebiger Viskosität, Dichte und Fließeigenschaften sein. Auch sind Füllungen, die sich in ihren physikalischen Eigenschaften von denen des Rahmens unterscheiden, verwendbar. Auch zähe Füllungen sind möglich. Selbstverständlich sind auch stückige Füllungen einsetzbar. Weiche Füllungen werden durch den Rahmen stabil. Damit wird die Gefahr beispielsweise eines Cremeaustritts und von Randverschmierungen minimiert. Durch die Veränderung der Rahmenbreite und der Rahmenhöhe kann das Füllungsvolumen individuell gestaltet werden.

Ein Rahmen kann einen Boden aufweisen, der mit der Innenfläche des ersten Gebäckteils in Kontakt ist. Der Boden ist vorzugsweise aus dem gleichen Material wie der Rahmen. Selbstverständlich können der Boden und der Rahmen auch aus unterschiedlichen Materialien bestehen.

Das erste Gebäckteil kann mit einem umlaufenden Rahmen und das zweite Gebäckteil kann mit einem plattenförmigen, aus einem zweiten Füllungsmaterial bestehenden Bereich versehen sein, wobei auf der Unterseite des Bereichs und/oder auf der Oberseite des Bodens des Innenraums, d. h. entweder auf der Innenfläche des ersten Gebäckteils oder auf der Oberseite des Bodens, ein drittes Füllungsmaterial vorgesehen wird, das bei in Kontakt bringen durch fluchtendes Zusammenfügen der beiden Gebäckteile diese durch ein Fügeverfahren, insbesondere durch Kleben gegebenenfalls nach Durchlaufen eines Kühlprozesses, miteinander verbindet. Bei einer solchen Ausgestaltung umfasst die Füllungsschicht neben zumindest einem Rahmen und zumindest einem von dem Rahmen umgebenen plattenförmigen, aus dem zweiten Füllungsmaterial bestehenden Bereich auch das dritte Füllungsmaterial.

Das den Rahmen bildende erste Füllungsmaterial kann im noch nicht erstarrten Zustand mit dem ersten Gebäckteil in Kontakt gebracht werden und das erste Füllungsmaterial kann anschließend in einer das erste Gebäckteil an sich bindender Weise erstarren. So kann beispielsweise das den Rahmen bildende erste Füllungsmaterial in eine rahmenförmige Form gegossen werden, und anschließend ein Gebäckteil auf das sich noch nicht im ausgehärteten Zustand befindliche erste Füllungsmaterial, das nach dem Aushärten den Rahmen bildet, aufgelegt werden. Nach dem Aushärten, beispielsweise durch Kühlen, ist der ausgehärtete Rahmen mit dem Gebäckteil verbunden. Alternativ kann auf ein Gebäckteil das den Rahmen bildende erste Füllungsmaterial aufgegossen werden, wobei vorzugsweise im Bereich der Oberseite des Gebäckteils eine geeignete Formvorrichtung angeordnet ist, die das Gießen eines Rahmens ermöglicht. Anschließend härtet das erste Füllungsmaterial aus. Sofern der Rahmen auch einen Boden umfasst, wird dieser vorzugsweise direkt mit dem Rahmen aufgegossen.

Das zweite Gebäckteil kann auf den, zumindest im späteren Kontaktbereich mit dem zweiten Gebäckteil, noch nicht bzw. nicht mehr vollständig erstarrten Rahmen aufgebracht werden. Damit ist der Rahmen zumindest im Kontaktbereich noch nicht vollständig erstarrt, d. h. ausgehärtet. Nach dem Aushärten ist das zweite Gebäckteil gegenüber dem Rahmen fixiert. Für das Fixieren kann, sofern der Rahmen beispielsweise bereits vollständig ausgehärtet ist, die mit dem zweiten Gebäckteil in Verbindung zu bringende Fläche beispielsweise leicht erwärmt werden und anschließend das zweite Gebäckteil aufgebracht werden.

Der Rahmen kann auch separat vorgefertigt werden.

Der Rahmen kann, insbesondere direkt, auf das erste Gebäckteil durch ein Fügeverfahren aufgebracht werden.

Unter Fügen wird ein Verfahren zur dauerhaften Verbindung von Rahmen und von dem betreffenden Gebäckteil, wie beispielsweise Ein- oder Anpressen, Füllen, Kleben oder dergleichen, verstanden. So kann beispielsweise die Oberfläche des Rahmens lokal erwärmt werden. Auch kann die Oberfläche des Rahmens beispielsweise Erhebungen aufweisen, die in entsprechende Ausnehmungen des Gebäckteils eingreifen.

Das zweite Gebäckteil kann mittels eines Fügeverfahrens mit dem Rahmen verbunden werden.

Beim Fügen können Zusatzstoffe verwendet werden. Hierbei kann es sich beispielsweise um flüssige Schokolade handein, die nach dem Aufbringen und in Kontakt bringen der zu verbindenden Bereiche abgekühlt wird.

Der Zusatzstoff kann dem den Rahmen bildenden ersten Füllungsmaterial und/oder dem die Füllung bildenden zweiten Füllungsmaterial entsprechen. Selbstverständlich kann sich der Zusatzstoff auch von dem den Rahmen bildenden ersten Füllungsmaterial und/oder dem die Füllung bildenden zweiten Füllungsmaterial unterscheiden.

Das den Rahmen bildende erste Füllungsmaterial kann gleich dem die Füllung bildenden zweiten Füllungsmaterial sein. Selbstverständlich können das erste Füllungsmaterial und das zweite Füllungsmaterial auch unterschiedlich sein.

Das dritte Füllungsmaterial kann gleich dem die Füllung bildenden zweiten Füllungsmaterial und/oder gleich dem den Rahmen bildenden ersten Füllungsmaterial sein. So können alle Füllungsmaterialien gleich oder unterschiedlich sein.

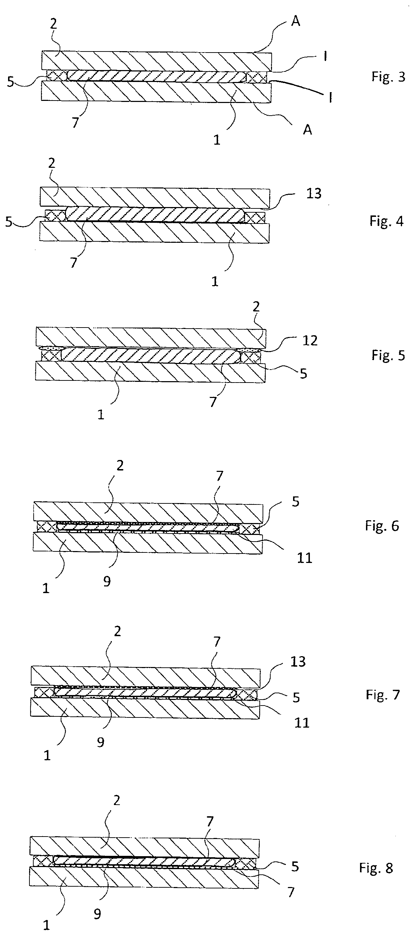

Im fertigen Zustand kann zwischen dem Rahmen einerseits und der Innenfläche eines der beiden Gebäckteile andererseits ein geringer Abstand verbleiben, und die beiden Gebäckteile können über die Füllung, die aus wenigstens einem weiteren aushärtenden Füllungsmaterial, insbesondere aus einem aushärtenden zweiten Füllungsmaterial, besteht, miteinander verbunden sein. Eine solche Ausgestaltung ist in Fig. 4 dargestellt. In diesem Fall muss die Füllung ausreichend hoch sein, damit ein Spalt entsteht. Die Füllung härtet aus, so dass die beiden Gebäckteile über die Füllung miteinander verbunden sind. Die Füllung ist zumindest so weit ausgehärtet, dass sie eine durch das Aushärten herbeigeführte äußere Ausgestaltung beibehält oder sich aufgrund ihrer Konsistenz bei einer Verlagerung aus ihrer herbeigeführten äußeren Ausgestaltung wieder in ihre herbeigeführte äußere Ausgestaltung zurückbewegt. Unter Aushärten wird auch die Erreichung beispielsweise einer Geleefestigkeit verstanden.

Die Oberflächen der beiden Gebäckteile können zumindest im Bereich des Innenraums eine feuchtigkeitsisolierende Barriereschicht zur Verwendung einer wasserhaltigen Füllung aufweisen. Dann kann es sich bei der Füllung auch um eine Flüssigkeit handeln. Als Barriereschicht beispielsweise für den Einsatz wasserhaltiger Füllungen können beispielsweise Fette/Fettglasuren, wie z. B. Mischungen aus Palm- und/oder Palmkernfett und/oder Kakaobutter, und/oder Überzugsmittel, wie z. B. Schellack, Gummi arabicum oder Bienenwachs, verwendet werden, die auf die beiden Gebäckteile aufgebracht werden. Selbstverständlich sind auch andere Materialien als Barriereschicht möglich.

Die Erfindung betrifft auch eine Backware, umfassend zwei im Wesentlichen plattenförmig ausgebildete Gebäckteile, die jeweils eine Innenfläche und eine Außenfläche aufweisen, sowie eine zwischen den beiden Gebäckteilen angeordnete Füllungsschicht, insbesondere hergestellt nach einem der Verfahrensansprüche.

In der Praxis sind Backwaren bekannt, bei denen zwischen zwei Gebäckteilen als Füllungsschicht beispielsweise eine Schokoladencreme eingebracht worden ist. Nachteilig ist, dass derartige Backwaren einen unregelmäßigen Verlauf des Randes der Füllungsschicht aufweisen. Auch kann der Abstand zwischen dem Rand der Füllungsschicht und dem äußeren Rand der Backware variieren.

Aufgabe der Erfindung ist es, die vorgenannten Nachteile zu vermeiden und eine Backware anzugeben, die eine Füllungsschicht aufweist, deren äußerer Rand beliebig ausgestaltet werden kann und der insoweit auch das gewünschte äußere Erscheinungsbild aufweist und die sich gleichzeitig durch vielfältige Füllungsmöglichkeiten auszeichnet.

Diese Aufgabe wird durch die Backware gemäß Anspurch 14 gelöst.

Der Rahmen kann direkt und/oder indirekt mittels eines Zusatzstoffes mit den Innenflächen beider Gebäckteile in Kontakt sein. Bei einem indirekten in Kontakt sein ist zwischen dem Rahmen und dem Gebäckteil ein Zusatzstoff oder eine anders ausgebildete Schicht vorgesehen.

Sofern mehrere Rahmen vorgesehen sind, können benachbarte Rahmen im Abstand zueinander angeordnet sein oder sich auch berühren. Sofern benachbarte Rahmen sich berühren, können diese benachbarten Rahmen auch einen gemeinsamen Rahmenabschnitt in Form eines Steges aufweisen.

Der umlaufende Rahmen kann einen Boden aufweisen, der mit der Innenfläche des ersten Gebäckteils in Kontakt ist. Der Boden ist vorzugsweise aus dem gleichen Material wie der Rahmen. Selbstverständlich können der Boden und der Rahmen auch aus unterschiedlichen Materialien bestehen.

Im fertigen Zustand kann zwischen dem Rahmen einerseits und der Innenfläche eines der beiden Gebäckteile andererseits ein geringer Abstand sein, und der die Füllung des Innenraums des Rahmens bildende Bereich des zweiten Füllungsmaterials kann aus einem aushärtenden Material ausgebildet sein, wobei die Füllung einerseits mit der Innenfläche des zum Rahmen beabstandet angeordneten Gebäckteils und andererseits entweder mit zumindest einer dem Innenraum zugewandten Fläche des Rahmens und/oder mit der Innenfläche des zum Rahmen nicht beabstandet angeordneten Gebäckteils und/oder mit der Oberseite des Bodens des Innenraums, d. h. mit der Innenfläche des ersten Gebäckteils bzw. mit der Oberseite eines Bodens, beispielweise aus Schokolade, verbunden ist.

Bei dem den Rahmen bildenden ersten Füllungsmaterial handelt es sich um Schokolade oder um eine Fettglasur. Bei dem plattenförmigen, aus dem zweiten Füllungsmaterial bestehenden Bereich kann es sich beispielsweise um Schokolade, um eine Fettglasur, um Nougat, um eine Backware, um Fondant/Zuckermassen, um Karamell, um Krokant, um Marzipan, um Eiscreme, um Gelee, um Fruchtgummi/Weingummi, um Schaumzucker, um Käse, um Aspik, um Fleischwaren oder dergleichen handeln. Der Käse kann ausgestochen oder als Schmelzkäse ausgebildet sein. Selbstverständlich sind auch Kombinationen der vorgenannten Materialien oder andere Füllungsmaterialien möglich.

Für die aus dem zweiten Füllungsmaterial bestehende Füllung und/oder für das dritte Füllungsmaterial kann(können) beispielsweise Schokolade oder Fettglasuren oder Nougat oder Fettcremes, wie z. B. Milchcreme, oder Sahnecreme oder Ganache oder wasserbasierte Massen, wie z. B. Fondant/Zuckerdekormassen, oder Saucen, wie z. B. Schokoladensauce, Karamellsauce oder dergleichen, oder Backwaren oder Zuckerlösungen, wie z. B. Krustenpralinenfüllungen, oder Karamell oder Krokant oder puddingartige Massen oder Marzipan oder Eiscreme oder Gelee oder Fruchtmassen oder Fruchtgummi/Weingummi oder Schaumzucker oder Käse (ausgestochen oder Schmelzkäse) oder Käsecreme oder Lachscreme oder Aspik oder Fleischwaren verwendet werden. Selbstverständlich sind auch Kombinationen der vorgenannten Materialien oder andere Materialien möglich.

Auch kann(können) das den Rahmen bildende erste Füllungsmaterial und/oder die aus dem zweiten Füllungsmaterial bestehende Füllung und/oder das dritte Füllungsmaterial und/oder der aus dem zweiten Füllungsmaterial bestehende plattenförmige Bereich Feststoffe, wie gefriergetrocknete Früchte, wie z. B. Erdbeeren, oder Orangeat oder Zitronat oder Fruchtpulpe oder Karamell oder Krokant oder Schalenfrüchte, wie z. B. Haselnüsse, Macadamianüsse, oder Kerne von Steinfrüchten, wie z. B. Kokos, Mandeln, Pekannüsse, Pistazien oder Erdnüsse oder Cashewnüsse, oder Ölsaaten, wie z. B. Sonnenblumenkerne, Sesam, Mohn, oder Extrudate, wie z. B. Reiscrisps, Weizenpops, Cornflakes, oder Schokolade oder Zuckerperlen beinhalten. Selbstverständlich sind auch Kombinationen der vorgenannten Zutaten oder andere Materialien möglich.

Die Gebäckteile können beispielsweise aus Hefefeinteigen bestehen. Als Gebäckteile können auch Mürbeteiggebäcke, Hartkekse, Blätterteiggebäcke, Plunderteiggebäcke, Waffeln, Lebkuchen, Kräcker, Laugendauergebäcke, Oblaten, Zwieback, Baiser, Biskuits, Makronengebäcke, Florentiner, Nussknacker, Brote, Trockenflachbrote oder auch Knäckebrote eingesetzt werden. Selbstverständlich können auch andere Backwaren oder Kombinationen verschiedener Backwaren eingesetzt werden.

Im Folgenden werden in den Zeichnungen dargestellte Ausführungsbeispiele der Erfindung erläutert. Es zeigen:
- Fig. 1a-g: die Abfolge einer ersten Ausführungsvariante eines erfindungsgemäßen Herstellverfahrens,
- Fig. 2a-j: die Abfolge einer zweiten Ausführungsvariante eines erfindungsgemäßen Herstellverfahrens,
- Fig. 3: einen Schnitt durch ein erstes Ausführungsbeispiel einer Backware,
- Fig. 4: einen Schnitt durch ein alternatives Ausführungsbeispiel einer Backware,
- Fig. 5: einen Schnitt durch ein alternatives Ausführungsbeispiel einer Backware,
- Fig. 6: einen Schnitt durch ein alternatives Ausführungsbeispiel einer Backware,
- Fig. 7: einen Schnitt durch ein alternatives Ausführungsbeispiel einer Backware,
- Fig. 8: einen Schnitt durch ein alternatives Ausführungsbeispiel einer Backware und
- Fig. 9: ein alternatives Ausführungsbeispiel einer Backware.

In allen Figuren werden für gleiche bzw. gleichartige Bauteile übereinstimmende Bezugszeichen verwendet.

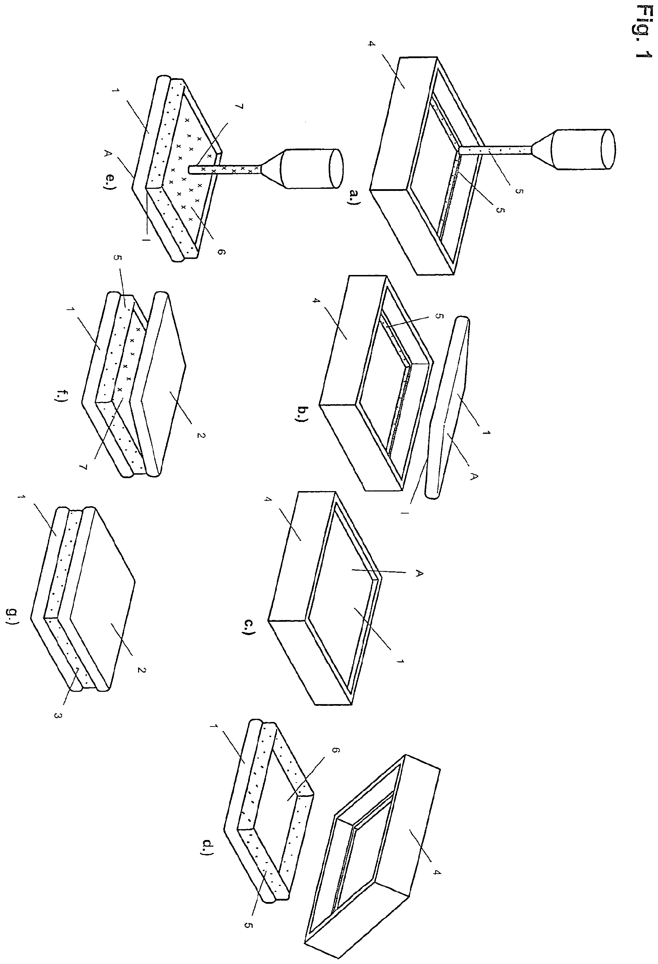

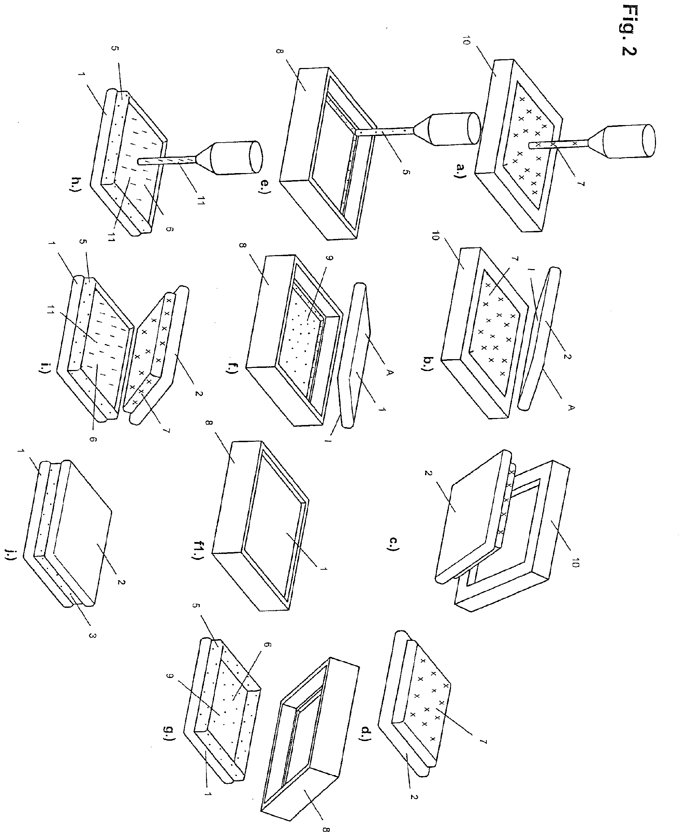

In den Fig. 1 und 2 sind Abfolgen zweier Ausführungsvarianten des erfindungsgemäßen Herstellverfahrens dargestellt.

Jede Backware umfasst zwei im Wesentlichen plattenförmig ausgebildete Gebäckteile 1, 2, die jeweils eine Innenfläche I und eine Außenfläche A aufweisen, sowie eine zwischen den beiden Gebäckteilen 1, 2 angeordnete Füllungsschicht 3.

Die erste Ausführungsvariante eines erfindungsgemäßen Verfahrens zur Herstellung ist in Fig. 1 dargestellt. In einem ersten Schritt a) wird in eine Form 4 ein erstes Füllungsmaterial 5 eingegossen, das nach dem späteren Aushärten einen umlaufenden Rahmen bildet.

Auf das noch nicht ausgehärtete erste Füllungsmaterial 5 wird - wie in Schritt b) dargestellt - ein erstes Gebäckteil 1 aufgelegt. Die Form 4 mit dem noch nicht ausgehärteten ersten Füllungsmaterial 5 und dem darauf aufgelegten ersten Gebäckteil 1 kann gegebenenfalls über einen Rütteltisch transportiert werden, um den richtigen Sitz des Gebäckteils 1 in der Form 4 zu erzielen. Auf diese Weise wird eine optimale Verbindung zwischen dem ersten Füllungsmaterial 5 und dem ersten Gebäckteil 1 hergestellt und ein optisch ansprechendes Produkt erzielt.

Anschließend durchläuft die Form 4 einen Kühlprozess (Schritt c). Nach dem Kühlprozess wird das erste Gebäckteil 1 mit dem dann ausgehärteten Rahmen, der aus dem ausgehärteten ersten Füllungsmaterial 5 besteht und einen muldenförmigen Innenraum 6 bildet, aus der Form 4 entnommen. Dieser Austafelschritt ist in Schritt d) dargestellt.

Wie in Fig. 1 e) dargestellt, wird nun in den Innenraum 6 eine Füllung aus einem zweiten Füllungsmaterial 7 eingebracht und gemäß Schritt f) das zweite Gebäckteil 2 auf die Gesamtheit bestehend aus dem ersten Gebäckteil 1 mit dem Rahmen und der aufgegebenen Füllung aus einem zweiten Füllungsmaterial 7 aufgebracht. Die Füllung aus dem zweiten Füllungsmaterial 7 ist noch nicht ausgehärtet. Die Backware wird nun in Schritt g) gekühlt, so dass das zweite Füllungsmaterial 7 aushärtet und eine stabile Verbindung mit dem ersten Gebäckteil 1, der Innenfläche des Rahmens und dem zweiten Gebäckteil 2 eingeht.

Fig. 2 zeigt eine alternative Ausführungsvariante eines erfindungsgemäßen Herstellverfahrens. Wie in Schritt e) dargestellt ist, wird zunächst in eine Form 8 ein erstes Füllungsmaterial 5 eingegossen. Dieses erste Füllungsmaterial 5 bildet nach dem Aushärten einen Rahmen. In dem dargestellten Ausführungsbeispiel bildet das ausgehärtete erste Füllungsmaterial 5 noch einen Boden 9, so dass insoweit der Rahmen und der Boden 9 aus dem später ausgehärteten ersten Füllungsmaterial 5 bestehen. Der von dem Rahmen umschlossene Bereich und der Boden 9 bilden wiederum einen muldenförmigen Innenraum 6. Es ist selbstverständlich auch eine Ausführungsform ohne einen Boden 9 denkbar.

Auf das noch nicht ausgehärtete erste Füllungsmaterial 5 wird in den Schritten f) und f1) das erste Gebäckteil 1 aufgelegt. Anschließend härtet das erste Füllungsmaterial 5 in einem Kühlschritt aus, wobei nach dem Aushärten das Gebäckteil 1 zusammen mit dem Rahmen und dem Boden 9 in Schritt g) ausgetafelt wird.

Ferner wird, so wie es in Schritt a) dargestellt ist, in eine andere Form 10 ein zweites Füllungsmaterial 7 gegossen. Die mit dem zweiten Füllungsmaterial 7 versehene Fläche in der Form 10 ist hinsichtlich ihrer Abmessungen und ihrer Anordnung so gewählt, dass sich das zweite Füllungsmaterial 7 beim später beschriebenen Zusammenfügen in dem Bereich der Innenfläche des ersten Gebäckteils 1 befindet, der bei fluchtendem Zusammenfügen der beiden Gebäckteile 1, 2 innerhalb der Projektion der Innenfläche des Rahmens befindlich ist.

Auf das noch nicht ausgehärtete zweite Füllungsmaterial 7 wird - so wie es in Schritt b) dargestellt ist - ein zweites Gebäckteil 2 aufgelegt. Anschließend wird das mit dem zweiten Gebäckteil 2 in Kontakt befindliche, zweite Füllungsmaterial 7 abgekühlt, so dass das zweite Füllungsmaterial 7 aushärtet und auf diese Weise ein plattenförmiger Bereich auf dem zweiten Gebäckteil 2 entsteht. Nach Abschluss des Kühlprozesses wird in Schritt c) auch das zweite Gebäckteil 2 mit dem plattenförmigen Bereich aus dem ausgehärteten zweiten Füllungsmaterial 7 ausgetafelt.

Anschließend wird in den Innenraum 6, der aus dem umlaufenden Rahmen und dem Boden 9 gebildet ist, ein drittes Füllungsmaterial 11 eingebracht. Dies ist in Schritt h) dargestellt. Nach dem Einfüllen des beispielsweise noch nicht ausgehärteten dritten Füllungsmaterials 11 wird in Schritt i) das zweite Gebäckteil 2 auf das erste Gebäckteil 1 aufgesetzt, wobei im aufgebrachten Zustand sich die Füllung, d. h. der plattenförmige, aus einem zweiten Füllungsmaterial 7 bestehende Bereich, in dem muldenförmigen Innenraum 6 befindet. Anschließend wird in Schritt j) ein Kühlprozess durchlaufen, in dem das dritte Füllungsmaterial 11 seine Viskosität ändert, insbesondere aushärtet, und auf diese Weise die beiden Gebäckteile 1, 2 gegeneinander verbunden werden.

In den Fig. 3 bis 9 sind unterschiedliche Ausführungsbeispiele von erfindungsgemäßen Backwaren dargestellt.

Bei dem Ausführungsbeispiel nach Fig. 3 ist in dem Bereich der Außenkanten der beiden Gebäckteile 1, 2 ein umlaufender Rahmen aus einem ersten Füllungsmaterial 5 vorgesehen. Der Rahmen aus einem ersten Füllungsmaterial 5 bildet einen Innenraum 6, in dem die Füllung aus einem zweiten Füllungsmaterial 7 angeordnet ist.

Der Rahmen könnte beispielsweise auch durch ein Fügeverfahren mit dem ersten Gebäckteil 1 und mit dem zweiten Gebäckteil 2 verbunden worden sein. Es ist aber auch durchaus möglich, dass der Rahmen nur mit dem ersten Gebäckteil 1 und/oder mit dem zweiten Gebäckteil 2 in Kontakt ist, während die eigentliche Verbindung der beiden Gebäckteile 1, 2 durch die ausgehärtete Füllung, d. h. durch das zweite Füllungsmaterial 7, bei dem es sich beispielsweise um Schokolade handeln kann, erfolgt.

In Fig. 4 ist ein Ausführungsbeispiel dargestellt, bei dem zwischen dem Rahmen einerseits und der Innenfläche I des zweiten Gebäckteils 2 andererseits ein geringer Abstand 13 ist. In diesem Fall besteht das die Füllung bildende zweite Füllungsmaterial 7 aus einem aushärtenden Material, wobei das zweite Füllungsmaterial 7 einerseits mit der Innenfläche I des zum Rahmen im Abstand angeordneten zweiten Gebäckteils 2 und andererseits mit der dem Innenraum zugewandten Fläche des Rahmens und mit der Innenfläche I des ersten Gebäckteils 1 verbunden ist. Sofern ein Boden 9 vorhanden ist, ist das zweite Füllungsmaterial 7 einerseits mit der Innenfläche I des zum Rahmen im Abstand angeordneten zweiten Gebäckteils 2 und andererseits mit der dem Innenraum zugewandten Fläche des Rahmens und mit dem Boden 9 verbunden.

In Fig. 5 ist ein Ausführungsbeispiel dargestellt, bei dem beispielsweise der Rahmen auf das erste Gebäckteil 1 aufgegossen worden ist und hierauf ausgehärtet ist. In den Innenraum 6 wird dann das die Füllung bildende zweite Füllungsmaterial 7 eingegeben. Das zweite Gebäckteil 2 wird mittels eines Fügeverfahrens unter Verwendung eines Zusatzstoffes 12 befestigt. Es sind aber auch andere Arten der Verbindung möglich. Der Zusatzstoff 12 kann beispielsweise dem den Rahmen bildenden ersten Füllungsmaterial 5 entsprechen. Auch können der Zusatzstoff 12 und das zweite Füllungsmaterial 7 gleich sein. Selbstverständlich sind auch andere Materialien denkbar.

Die in Fig. 5 dargestellte Backware kann auch durch Zusammendrücken der in Fig. 4 dargestellten Backware erzeugt werden, sofern das die Füllung bildende zweite Füllungsmaterial 7 noch nicht ausgehärtet ist. Da das Volumen des zweiten Füllungsmaterials 7 größer als das Volumen des Innenraums 6 ist, wird beim Zusammendrücken der beiden Gebäckteile 1, 2 das zweite Füllungsmaterial 7 nach außen seitlich in den Bereich zwischen der Oberseite des Rahmens und dem Gebäckteil 2 gedrückt. In einem solchen Fall handelt es sich bei dem zwischen der Oberseite des Rahmens und dem Gebäckteil 2 dargestellten Zusatzstoff 12 um das zweite Füllungsmaterial 7.

In den Ausführungsbeispielen nach den Fig. 6 bis 8 sind Backwaren dargestellt, bei denen der Rahmen einen Boden 9 aufweist, der mit der Innenfläche I des ersten Gebäckteils 1 in Kontakt ist. Selbstverständlich sind die in den Fig. 6 bis 8 dargestellten Backwaren auch ohne einen Boden 9 denkbar.

Während bei dem Ausführungsbeispiel nach Fig. 6 der Rahmen direkt mit dem zweiten Gebäckteil 2 in Kontakt ist, besteht bei der Ausführungsform nach Fig. 7 ein geringer Abstand 13. Bei einer solchen Ausgestaltung sind die beiden Gebäckteile 1, 2 über die Verbindung zwischen der aus einem aushärtbaren zweiten Füllungsmaterial 7 bestehenden Füllung, dem Boden 9 und dem dritten Füllungsmaterial 11 miteinander verbunden. Das zweite Füllungsmaterial 7 ist dabei seinerseits mit dem Gebäckteil 2 und der Boden 9 seinerseits mit dem Gebäckteil 1 verbunden. Das dritte Füllungsmaterial 11 ist in dem dargestellten Ausführungsbeispiel sowohl mit dem Boden 9 als auch mit den Innenflächen des Rahmens sowie mit dem zweiten Füllungsmaterial 7 verbunden.

In Fig. 8 ist ein Ausführungsbeispiel dargestellt, bei dem der Rahmen ebenfalls einen Boden 9 aufweist, der mit dem ersten Gebäckteil 1 in Kontakt ist. Der Rahmen und der Boden 9 können beispielsweise aufgegossen oder eingetafelt sein. Sie können aber auch separat vorgefertigt worden sein und anschließend durch ein Fügeverfahren mit dem ersten Gebäckteil 1 verbunden worden sein. In den durch den Rahmen und den Boden 9 gebildeten Innenraum 6 ist als Füllung ein zweites Füllungsmaterial 7 eingebracht worden. Anschließend ist ein zweites Gebäckteil 2 aufgebracht worden. Die Verbindung zwischen dem oberen Gebäckteil 2 und dem Rahmen kann beispielsweise durch ein Fügeverfahren realisiert sein. Selbstverständlich ist es auch möglich, dass beispielsweise das zweite Füllungsmaterial 7 im noch nicht ausgehärteten Zustand in den Innenraum 6 eingegeben worden ist. Nach Auflegen des zweiten Gebäckteils 2 härtet das zweite Füllungsmaterial 7, beispielsweise durch Kühlen, aus. Das Gebäckteil 2 berührt dabei das noch nicht ausgehärtete zweite Füllungsmaterial 7, so dass damit eine Verbindung zum zweiten Gebäckteil 2 hergestellt wird.

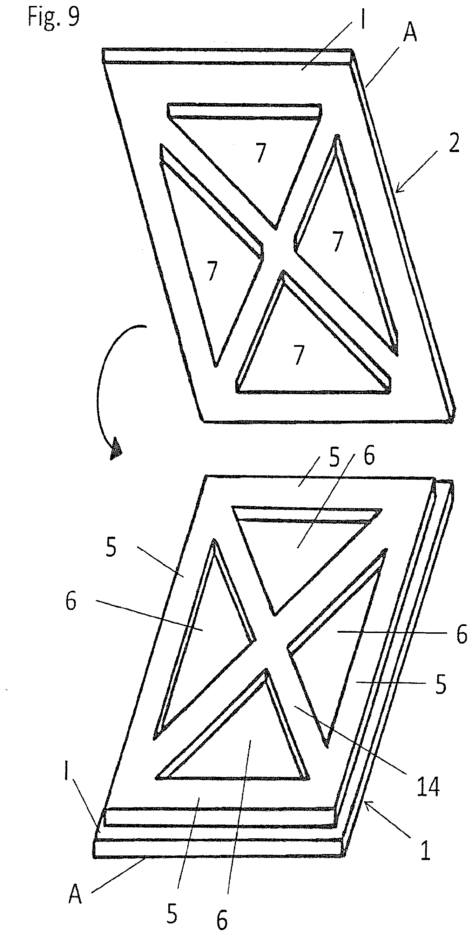

In Fig. 9 ist ein Ausführungsbeispiel dargestellt, dass in grundsätzlicher Hinsicht nach dem in den Fig. 2a-j dargestellten Herstellverfahren hergestellt worden ist. Im Gegensatz zu der in den Fig. 2a-j dargestellten Backware bildet in Fig. 9 das in eine Form 8 eingegossene erste Füllungsmaterial 5 nach dem Aushärten insgesamt vier Rahmen. Jeder Rahmen hat eine dreieckförmige Ausgestaltung. Zwei benachbarte Rahmen sind in dem dargestellten Ausführungsbeispiel durch einen gemeinsamen Steg 14 voneinander getrennt, der auf der Strecke zwischen zwei diagonal gegenüberliegend angeordneten Ecken der Backware liegt.

Demzufolge wird in eine andere Form 10 das zweite Füllungsmaterial 7 so eingegossen, dass auf dem zweiten Gebäckteil 2 beispielsweise nach dem Aushärten vier, aus dem zweiten Füllungsmaterial 7 bestehende Flächen entstehen. Die Flächen sind in dem dargestellten Ausführungsbeispiel ebenfalls dreieckig ausgebildet. Die vier Flächen des zweiten Füllungsmaterials 7 sind hinsichtlich ihrer Abmessungen und ihrer Anordnung so gewählt, dass sie beim späteren Zusammenfügen in die vier, an dem ersten Gebäckteil 1 durch Aushärten des ersten Füllungsmaterials 5 entstandenen muldenförmigen Innenräume 6 eingreifen. Im Übrigen entspricht das Herstellverfahren dem in den Fig. 2a-j dargestellten Herstellverfahren. Es ist selbstverständlich auch eine Ausführungsform mit einem Boden 9 denkbar.

Die Ausgestaltung jedes Rahmens ist frei wählbar. Auch müssen sich die Rahmen nicht berühren. Sofern mehrere Rahmen vorgesehen sind, kann beispielweise in jeden muldenförmigen Innenraum 6 ein anderes, die Fläche bildendes zweites Füllungsmaterials 7 eingreifen. Damit kann jeder Rahmen eine andere Füllung durch Verwendung beispielsweise unterschiedlicher zweiter Füllungsmaterialien 7 beinhalten. Auch können die Rahmen aus unterschiedlichen Materialien ausgebildet sein.

Sofern insbesondere wässrige Lösungen als Füllungen eingebracht werden sollen, ist die jeweilige Innenfläche I beider Gebäckteile 1, 2 zumindest in dem Bereich, der mit dem Material im Innenraum 6 in Kontakt ist, mit einer Barriereschicht versehen. Insbesondere bei der Verwendung von wässrigen Füllungen ist jedes Gebäckteil 1, 2 mit dem/den Rahmen verbunden.

## Patentansprüche

1. Verfahren zur Herstellung einer sandwichartig aufgebauten Backware, die zwei im Wesentlichen plattenförmig ausgebildete Gebäckteile (1, 2) mit je einer Innenfläche I und einer Außenfläche A sowie eine zwischen den beiden Gebäckteilen (1, 2) angeordnete Füllungsschicht (3) aufweist, wobei
entweder das erste Gebäckteil (1) mit einer Füllungsschicht (3) versehen wird, indem die Innenfläche I des ersten Gebäckteils (1), vorzugsweise im Bereich der Außenkanten des Gebäckteils (1), mit wenigstens einem umlaufenden Rahmen aus einem ersten Füllungsmaterial (5), bei dem es sich um Schokolade oder um eine Fettglasur handelt, versehen wird, wobei der von zumindest einem Rahmen umschlossene Bereich jeweils einen muldenförmigen Innenraum (6) bildet, und anschließend in diesen Innenraum (6) eine Füllung aus einem zweiten Füllungsmaterial (7) eingebracht wird, und wobei das zweite Gebäckteil (2) auf die Gesamtheit bestehend aus dem ersten Gebäckteil (1) und der Füllungsschicht (3) durch in Kontakt bringen der Innenfläche I des zweiten Gebäckteils (2) mit dem Rahmen und/oder mit der Füllung aufgebracht und damit verbunden wird und wobei das den Rahmen bildende erste Füllungsmaterial (5) im noch nicht erstarrten Zustand mit dem ersten eistes Anspruch Mittelteil Gebäckteil (1) in Kontakt gebracht wird und wobei das erste Füllungsmaterial (5) anschließend in einer das erste Gebäckteil (1) an sich bindender Weise erstarrt
oder aber zunächst die Innenfläche I des ersten Gebäckteils (1) vorzugsweise im Bereich der Außenkanten des Gebäckteils (1) mit wenigstens einem umlaufenden Rahmen aus einem ersten Füllungsmaterial (5), bei dem es sich um Schokolade oder um eine Fettglasur handelt, versehen wird, wobei der von zumindest einem Rahmen umschlossene Bereich jeweils einen muldenförmigen Innenraum (6) bildet, und weiterhin zunächst die Innenfläche I des zweiten Gebäckteils (2) in zumindest einem Bereich, der bei fluchtendem Zusammenfügen der beiden Gebäckteile (1, 2) innerhalb der Projektion der Innenfläche eines Rahmens befindlich ist, mit einem plattenförmigen, aus einem zweiten Füllungsmaterial (7) bestehenden Bereich, der bei fluchtendem Zusammenfügen der beiden Gebäckteile (1, 2) als Füllung in dem Innenraum (6) angeordnet ist, versehen wird und anschließend die Gesamtheit aus dem zweiten Gebäckteil (2) und dem/den jeweils später die Füllung (en) eines Innenraums (6) bildenden Bereich(en) des zweiten Füllungsmaterials (7) mit der Gesamtheit bestehend aus dem ersten Gebäckteil (1) und dem/den Rahmen durch in Kontakt bringen der Füllung mit dem Rahmen und/oder durch in Kontakt bringen der Füllung mit der Innenseite des ersten Gebäckteils und/oder durch in Kontakt bringen der Innenseite des zweiten Gebäckteils mit dem Rahmen verbunden wird, wobei sich im verbundenen Zustand der/die jeweils die Füllung eines Innenraums (6) bildende(n) Bereich(e) des zweiten Füllungsmaterials (7) in dem/den muldenförmigen Innenraum/Innenräumen (6) des ersten Füllungsmaterials (7) befindet/befinden und wobei weiterhin vorzugsweise zum einen das den Rahmen bildende erste Füllungsmaterial (5) im noch nicht erstarrten Zustand mit dem ersten Gebäckteil (1) in Kontakt gebracht wird und zum anderen das erste Füllungsmaterial (5) anschließend in einer das erste Gebäckteil (1) an sich bindender Weise erstarrt.

2. Verfahren nach dem vorhergehenden Anspruch, **dadurch gekennzeichnet, dass** der umlaufende Rahmen einen Boden (9) aufweist, der mit der Innenfläche I des ersten Gebäckteils (1) in Kontakt ist.

3. Verfahren nach einem der vorhergehenden Ansprüche, **dadurch gekennzeichnet, dass** das erste Gebäckteil (1) mit einem umlaufenden Rahmen und das zweite Gebäckteil (2) mit einem plattenförmigen, aus einem zweiten Füllungsmaterial (7) bestehenden Bereich versehen ist, wobei auf der Unterseite des Bereichs und/oder auf der Oberseite des Bodens des Innenraums (6) ein drittes Füllungsmaterial (11) vorgesehen wird, das bei in Kontakt bringen durch fluchtendes Zusammenfügen der beiden Gebäckteile (1, 2) diese durch ein Fügeverfahren, insbesondere durch Kleben, miteinander verbindet.

4. Verfahren nach einem der vorhergehenden Ansprüche, **dadurch gekennzeichnet, dass** das zweite Gebäckteil (2) auf den, zumindest im späteren Kontaktbereich mit dem zweiten Gebäckteil (2), noch nicht bzw. nicht mehr vollständig erstarrten Rahmen aufgebracht wird.

5. Verfahren nach einem der vorhergehenden Ansprüche, **dadurch gekennzeichnet, dass** der Rahmen separat vorgefertigt wird.

6. Verfahren nach dem vorhergehenden Anspruch, **dadurch gekennzeichnet, dass** der Rahmen auf das erste Gebäckteil (1) durch ein Fügeverfahren aufgebracht wird.

7. Verfahren nach einem der vorhergehenden Ansprüche, **dadurch gekennzeichnet, dass** das zweite Gebäckteil (2) mittels eines Fügeverfahrens mit dem Rahmen verbunden wird.

8. Verfahren nach einem der Ansprüche 6 oder 7, **dadurch gekennzeichnet, dass** beim Fügen Zusatzstoffe (12) verwendet werden.

9. Verfahren nach dem vorhergehenden Anspruch, **dadurch gekennzeichnet, dass** der Zusatzstoff (12) dem den Rahmen bildenden ersten Füllungsmaterial (5) und/oder dem die Füllung bildenden zweiten Füllungsmaterial (7) entspricht.

10. Verfahren nach einem der vorhergehenden Ansprüche, **dadurch gekennzeichnet, dass** das den Rahmen bildende erste Füllungsmaterial (5) gleich dem die Füllung bildenden zweiten Füllungsmaterial (7) ist.

11. Verfahren nach einem der Ansprüche 3 bis 10, **dadurch gekennzeichnet, dass** das dritte Füllungsmaterial (11) gleich dem die Füllung bildenden zweiten Füllungsmaterial (7) und/oder gleich dem den Rahmen bildenden ersten Füllungsmaterial (5) ist.

12. Verfahren nach einem der vorhergehenden Ansprüche, **dadurch gekennzeichnet, dass** im fertigen Zustand zwischen dem Rahmen einerseits und der Innenfläche I eines der beiden Gebäckteile (1, 2) andererseits ein geringer Abstand (13) verbleibt und dass die beiden Gebäckteile (1, 2) insbesondere über die Füllung, die aus wenigstens einem weiteren aushärtenden Füllungsmaterial, insbesondere aus einem aushärtenden zweiten Füllungsmaterial (7), besteht, miteinander verbunden sind.

13. Verfahren nach einem der vorhergehenden Ansprüche, **dadurch gekennzeichnet, dass** die Oberflächen der beiden Gebäckteile (1, 2) zumindest im Bereich des Innenraums (6) eine feuchtigkeitsisolierende Barriereschicht zur Verwendung einer wasserhaltigen Füllung aufweisen.

14. Backware, umfassend zwei im Wesentlichen plattenförmig ausgebildete Gebäckteile (1, 2), die jeweils eine Innenfläche I und eine Außenfläche A aufweisen, sowie eine zwischen den beiden Gebäckteilen (1, 2) angeordnete Füllungsschicht (3), hergestellt nach einem der vorhergehenden Ansprüche, **dadurch gekennzeichnet, dass** die Füllungsschicht (3), vorzugsweise im Bereich der Außenkanten der Gebäckteile (1, 2), wenigstens einen umlaufenden, einen Innenraum (6) bildenden Rahmen aus einem ersten Füllungsmaterial (5) und eine in dem Innenraum (6) angeordnete Füllung aus einem zweiten Füllungsmaterial (7) und gegebenenfalls wenigstens einem weiteren Füllungsmaterial umfasst.

15. Backware nach dem vorhergehenden Anspruch, **dadurch gekennzeichnet, dass** der Rahmen direkt oder indirekt mittels eines Zusatzstoffes (12) mit den Innenflächen I beider Gebäckteile (1, 2) in Kontakt ist.

16. Backware nach einem der Ansprüche 14 bis 15, **dadurch gekennzeichnet, dass** der umlaufende Rahmen einen Boden (9) aufweist, der mit der Innenfläche I des ersten Gebäckteils (1) in Kontakt ist.

17. Backware nach einem der Ansprüche 14 bis 16, **dadurch gekennzeichnet, dass** im fertigen Zustand zwischen dem Rahmen einerseits und der Innenfläche I eines der beiden Gebäckteile (1, 2) andererseits ein geringer Abstand (13) ist und dass der die Füllung des Innenraums (6) bildende Bereich des zweiten Füllungsmaterials (7) aus einem aushärtenden Material ausgebildet ist, wobei die Füllung einerseits mit der Innenfläche I des zum Rahmen beabstandet angeordneten Gebäckteils (1, 2) und andererseits entweder mit zumindest einer dem Innenraum (6) zugewandten Fläche des Rahmens und mit der Oberseite des Bodens (9) des Innenraums (6) und/oder mit der Innenfläche I des zum Rahmen nicht beabstandet angeordneten Gebäckteils (1, 2) verbunden ist.

## Claims

1. Method for producing a sandwich-form bakery product, comprising two substantially plate-shaped baked parts (1, 2), each with an inner surface I and an outer surface A, as well as a filling layer (3) arranged between the two baked parts (1, 2), wherein
either the first baked part (1) is provided with a filling layer (3), inasmuch as the inner surface I of the first baked part (1) is provided, preferably in the area of the outer edges of the baked part (1), with at least one circumferential frame of a first filling material (5), which involves chocolate or a fat glaze, wherein the area enclosed by at least one frame forms in each case a trough-shaped inner space (6), and then a filling of a second filling material (7) is introduced into this internal space (6), and wherein the second baked part (2) is brought onto the composite whole, consisting of the first baked part (1) and the filling layer (3), by bringing in contact the inner surface I of the second baked part (2) with the frame and/or with the filling and is connected to it, and wherein the first filling material (5) forming the frame, while still not yet in the solid state, is brought in contact with the first baked part (1), and wherein the first filling material (5) then solidifies in a manner which binds the first baked part (1) to it,
or first the inner surface I of the first baked part (1) is provided, preferably in the area of the outer edges of the baked part (1), with at least one circumferential frame of a first filling material (5), which involves chocolate or a fat glaze, wherein the area enclosed by at least one frame forms in each case a trough-shaped inner space (6), and, further, first the inner surface I of the second baked part (2) is provided in at least one area, which, with the flush joining together of the two baked parts (1, 2), is located inside the projection of the inner surface of a frame, with an area consisting of a plate-shaped area consisting of a second filling material (7), which, with flush joining of the two baked parts (1, 2), is arranged as filling in the inner space (6), and then the composite whole, consisting of the two baked parts (2) and the area(s) of the second filling material (7) which in each case later form the filling(s) of an inner space (6), is connected to the composite whole consisting of the first baked part (1) and the frame(s), by bringing the filling in contact with the frame, and/or bringing the filling in contact with the inner side of the first baked part, and/or by bringing the inner side of the second baked part in contact with the frame, wherein, in the connected state, the area(s) of the second material (7), in each case forming the filling of an inner area (6), is/are located in the trough-shaped inner space(s) (6) of the first filling material (7), and wherein, for further preference, on the one hand the first filling material (5), forming the frame, in the still not yet solidified state, is brought in contact with the first baked part (1), and, on the other, the first filling material (5) then solidifies in a manner which binds the first baked part (1) to it.

2. Method according to the preceding claim, **characterised in that** the circumferential frame comprises a base (9), which is in contact with the inner surface I of the first baked part (1).

3. Method according to any one of the preceding claims, **characterised in that** the first baked part (1) is provided with a circumferential frame, and the second baked part (2) is provided with a plate-shaped area consisting of a second filling material (7), wherein, on the under side of the area and/or on the upper side of the base of the inner space (6) a third filling material (11) is provided, which, when the two baked parts (1, 2) are brought in contact by flush joining, they are bonded to one another by a joining method, in particular by adhesive bonding.

4. Method according to any one of the preceding claims, **characterised in that** the second baked part (2) is located onto the frame which is not yet or no longer fully solidified, at least in the later contact are with the second baked part (2).

5. Method according to any one of the preceding claims, **characterised in that** the frame is prepared separately beforehand.

6. Method according to any one of the preceding claims, **characterised in that** the frame is located onto the first baked part (1) by a joining method.

7. Method according to any one of the preceding claims, **characterised in that** the second baked part (2) is connected to the frame by means of a joining method.

8. Method according to any one of claims 6 or 7, **characterised in that** during joining additional substances are used (12).

9. Method according to the preceding claim, **characterised in that** the additional substance (12) corresponds to the first filling material (5) forming the frame and/or the second filling material (7) forming the filling.

10. Method according to any one of the preceding claims, **characterised in that** the first filling material (5) forming the frame is the same as the second filling material (7) forming the filling.

11. Method according to any one of the claims 3 to 10, **characterised in that** the third filling material (11) is the same as the second filling material (7) forming the filling and/or the same as the first filling material (5) forming the frame.

12. Method according to any one of the preceding claims, **characterised in that,** in the finished state, between the frame on the one hand and the inner surface I of one of the two baked parts (1, 2) on the other, a small distance interval (13) remains, and that the two baked parts (1, 2) are connected to one another in particular by the filling, which consists of at least one further hardening filling material, in particular of a hardening second filling material (7).

13. Method according to any one of the preceding claims, **characterised in that** the surfaces of the two baked parts (1, 2) comprise, at least in the area of the inner space (6) a moisture-insulating barrier layer for the use of a filler containing water.

14. Baked product, comprising two substantially plate-shaped baked parts (1, 2), which in each case comprise an inner surface I and an outer surface A, as well as a filling layer (3) arranged between the two baked parts (1, 2), produced in accordance with any one of the preceding claims, **characterised in that** the filling layer (3) comprises, preferably in the area of the outer edges of the baked parts (1, 2), at least one circumferential frame, forming an inner space (6), and a filling arranged in the inner space (6) of a second filling material (7) and, if appropriate, at least one further filling material (5).

15. Baked product according to the preceding claim, **characterised in that** the frame is in contact, directly or indirectly, by means of an additional substance (12), with the inner surfaces I of both baked parts (1, 2).

16. Baked product according to any one of the preceding claims 14 to 15, **characterised in that** the circumferential frame comprises a base (9) which is in contact with the inner surface I of the first baked part (1).

17. Baked product according to any one of the preceding claims 14 to 16, **characterised in that** in the finished state, between the frame on the one hand and the inner surface I of one of the two baked parts (1, 2) on the other, a small distance interval (13) remains, and that the area of the second filling material (7) forming the filling of the inner space (6) is formed from a hardening material, wherein the filling is connected on the one hand with the inner surface I of the baked part (1, 2) arranged at a distance from the frame, and, on the other, either with at least one surface of the frame facing the inner space (6) and with the upper side of the base (9) of the inner space (6) and/or with the inner surface I of the baked part (1, 2) which is arranged with no distance interval to the frame.

## Revendications

1. Procédé de fabrication d'un article de boulangerie à structure de type sandwich, composé de deux parties de biscuit (1, 2) réalisées pour l'essentiel en forme de plaquettes et présentant, respectivement, une face intérieure I et une face extérieure A, ainsi que d'une couche de fourrage (3) interposée entre les deux parties de biscuit (1, 2), procédé dans lequel, en variante,
la première partie de biscuit (1) est pourvue d'une couche de fourrage (3) en munissant la face intérieure I de ladite première partie de biscuit (1), de préférence dans la région des arêtes extérieures de ladite première partie de biscuit (1), d'au moins en encadrement périphérique constitué d'une première substance de garnissage (5) se présentant comme du chocolat ou comme un glaçage gras, sachant que la région, ceinturée par au moins un encadrement, forme à chaque fois un espace interne (6) configuré en une auge, un fourrage, constitué d'une deuxième substance de garnissage (7), étant ensuite déversé dans cet espace interne (6), la seconde partie de biscuit (2) étant déposée sur l'ensemble intégralement composé de la première partie de biscuit (1) et de la couche de fourrage (3), et étant reliée audit ensemble par mise en contact de la face intérieure I de ladite seconde partie de biscuit (2) avec l'encadrement et/ou avec le fourrage, sachant que la première substance de garnissage (5), constituant ledit encadrement, est mise en contact avec la première partie de biscuit (1) à l'état non encore solidifié, ladite première substance de garnissage (5) se solidifiant, dans l'enchaînement direct, d'une manière instaurant une liaison intime avec ladite première partie de biscuit (1),
ou bien la face intérieure I de la première partie de biscuit (1) est munie dans un premier temps, de préférence dans la région des arêtes extérieures de ladite première partie de biscuit (1), d'au moins un encadrement périphérique constitué d'une première substance de garnissage (5) se présentant comme du chocolat ou comme un glaçage gras, sachant que la région, ceinturée par au moins un encadrement, forme à chaque fois un espace interne (6) configuré en une auge, et la face intérieure I de la seconde partie de biscuit (2) est par ailleurs munie dans un premier temps, dans au moins une zone située dans les limites de la projection de la face intérieure d'un encadrement lorsque les deux parties de biscuit (1, 2) sont solidarisées de manière alignée, d'une région configurée en une plaquette, constituée d'une deuxième substance de garnissage (7) et logée dans ledit espace interne (6), en tant que fourrage, lorsque lesdites deux parties de biscuit (1, 2) sont solidarisées de manière alignée, l'ensemble, intégralement composé de la seconde partie de biscuit (2) et de la (des) région(s) de ladite deuxième substance de garnissage (7) qui forment, respectivement, le(s) fourrage(s) d'un espace interne (6) à un stade ultérieur, étant ensuite relié à l'ensemble intégralement composé de la première partie de biscuit (1) et de l'encadrement (des encadrements), par mise en contact du fourrage avec l'encadrement et/ou par mise en contact dudit fourrage avec la face intérieure de ladite première partie de biscuit et/ou par mise en contact de la face intérieure de ladite seconde partie de biscuit avec ledit encadrement, sachant qu'à l'état assemblé, la (les) région(s) de la deuxième substance de garnissage (7), qui forment respectivement le fourrage d'un espace interne (6), est (sont) située(s) dans l'espace interne (les espaces internes) (6), en forme d'auge(s), de ladite deuxième substance de garnissage (7), et sachant en outre que, de préférence, d'une part la première substance de garnissage (5) formant l'encadrement est mise en contact, à l'état non encore solidifié, avec la première partie de biscuit (1) et que, d'autre part, ladite première substance de garnissage (5) se solidifie, dans l'enchaînement direct, d'une manière instaurant une liaison intime avec ladite première partie de biscuit (1).

2. Procédé selon la revendication précédente, **caractérisé par le fait que** l'encadrement périphérique est doté d'un fond (9) en contact avec la face intérieure I de la première partie de biscuit (1).

3. Procédé selon l'une des revendications précédentes, **caractérisé par le fait que** la première partie de biscuit (1) est pourvue d'un encadrement périphérique, et la seconde partie de biscuit (2) est dotée d'une région en forme de plaquette constituée d'une deuxième substance de garnissage (7), sachant qu'il est prévu, sur la face inférieure de ladite région et/ou sur la face supérieure du fond de l'espace interne (6), une troisième substance de garnissage (11) qui, lors d'une mise en contact par solidarisation alignée des deux parties de biscuit (1, 2), relie ces dernières l'une à l'autre par un procédé de jonction, en particulier par collage.

4. Procédé selon l'une des revendications précédentes, **caractérisé par le fait que** la seconde partie de biscuit (2) est déposée sur l'encadrement non encore solidifié ou, respectivement, dont la solidification n'est plus complète, au moins dans la région ultérieurement en contact avec ladite seconde partie de biscuit (2).

5. Procédé selon l'une des revendications précédentes, **caractérisé par le fait que** l'encadrement est préfabriqué distinctement.

6. Procédé selon la revendication précédente, **caractérisé par le fait que** l'encadrement est déposé sur la première partie de biscuit (1) par un procédé de jonction.

7. Procédé selon l'une des revendications précédentes, **caractérisé par le fait que** la seconde partie de biscuit (2) est reliée à l'encadrement au moyen d'un procédé de jonction.

8. Procédé selon l'une des revendications 6 ou 7, **caractérisé par le fait que** des adjuvants (12) sont utilisés au cours de la jonction.

9. Procédé selon la revendication précédente, **caractérisé par le fait que** l'adjuvant (12) correspond à la première substance de garnissage (5) constituant l'encadrement et/ou à la deuxième substance de garnissage (7) constituant le fourrage.

10. Procédé selon l'une des revendications précédentes, **caractérisé par le fait que** la première substance de garnissage (5), constituant l'encadrement, est identique à la deuxième substance de garnissage (7) constituant le fourrage.

11. Procédé selon l'une des revendications 3 à 10, **caractérisé par le fait que** la troisième substance de garnissage (11) est identique à la deuxième substance de garnissage (7) constituant le fourrage, et/ou identique à la première substance de garnissage (5) constituant l'encadrement.

12. Procédé selon l'une des revendications précédentes, **caractérisé par le fait qu'**une faible distance (13) subsiste à l'état achevé entre l'encadrement, d'une part, et la face intérieure I de l'une des deux parties de biscuit (1, 2), d'autre part ; et **par le fait que** lesdites deux parties de biscuit (1, 2) sont reliées l'une à l'autre, en particulier, par l'intermédiaire du fourrage constitué d'au moins une substance de garnissage supplémentaire durcissante, notamment d'une deuxième substance de garnissage (7) durcissante.

13. Procédé selon l'une des revendications précédentes, **caractérisé par le fait que** les surfaces des deux parties de biscuit (1, 2) comportent, au moins dans la région de l'espace interne (6), une couche formant barrière isolant de l'humidité en vue de l'utilisation d'un fourrage renfermant de l'eau.

14. Article de boulangerie composé de deux parties de biscuit (1, 2) réalisées pour l'essentiel en forme de plaquettes et présentant, respectivement, une face intérieure I et une face extérieure A, ainsi que d'une couche de fourrage (3) interposée entre les deux parties de biscuit (1, 2), fabriqué en conformité avec l'une des revendications précédentes et **caractérisé par le fait que** la couche de fourrage (3) inclut, de préférence dans la région des arêtes extérieures des parties de biscuit (1, 2), au moins un encadrement périphérique formant un espace interne (6) et constitué d'une première substance de garnissage (5), et un fourrage qui est logé dans ledit espace interne (6) et est constitué d'une deuxième substance de garnissage (7) et, le cas échéant, d'au moins une substance de garnissage supplémentaire.

15. Article de boulangerie selon la revendication précédente, **caractérisé par le fait que** l'encadrement est directement ou indirectement en contact, au moyen d'un adjuvant (12), avec les faces intérieures I des deux parties de biscuit (1, 2).

16. Article de boulangerie selon l'une des revendications 14 à 15, **caractérisé par le fait que** l'encadrement périphérique est doté d'un fond (9) en contact avec la face intérieure I de la première partie de biscuit (1).

17. Article de boulangerie selon l'une des revendications 14 à 16, **caractérisé par** la présence, à l'état achevé, d'une faible distance (13) entre l'encadrement, d'une part, et la face intérieure I de l'une des deux parties de biscuit (1, 2), d'autre part ; et par le fait que la région de la deuxième substance de garnissage (7), qui forme le fourrage de l'espace interne (6), est réalisée en une substance durcissante, ledit fourrage étant relié, d'une part, à la face intérieure I de la partie de biscuit (1, 2) située à distance de l'encadrement et, d'autre part, à au moins une surface dudit encadrement tournée vers l'espace interne (6) et à la face supérieure du fond (9) dudit espace interne (6), et/ou à la face intérieure I de la partie de biscuit (1, 2) non située à distance dudit encadrement.
